# EUROPÄISCHE PATENTANMELDUNG

(11) **EP 0 707 204 A2**
(43) Veröffentlichungstag der Anmeldung: **17.04.1996**
(21) Anmeldenummer: 95114165.4
(22) Anmeldetag: 09.09.1995
(51) Int. Cl.: G01L 17/00, G01B 5/18, G01B 3/28

(54) **Druckprüfgerät**

(30) Priorität: 14.10.1994 DE 4436722
(71) Anmelder: Moto Meter GmbH, D-71229 Leonberg (DE)
(72) Erfinder: Müller-Sybrichs, Ralf, Dipl.-Ing. (FH), D-71254 Ditzingen (DE)
(74) Vertreter: Voss, Klaus, Dipl.-Ing.

(57) **Zusammenfassung**

Es wird ein Druckprüfgerät mit einer Druckmeßvorrichtung und mit einer Anzeigevorrichtung mit einem über einem Zifferblatt beweglich gelagerten Zeiger und mit einer Profiltiefenmeßvorrichtung vorgeschlagen, die eine verschiebbare Profiltiefenmeßstange aufweist. Der Verschiebeweg der Profiltiefenmeßstange ist dabei mittels des Zeigers auf dem Zifferblatt anzeigbar.

## Beschreibung

### Stand der Technik

Die Erfindung geht aus von einem Druckprüfgerät nach dem Oberbegriff des Hauptanspruchs. Es ist ein Reifenluftdruckprüfgerät bekannt, das zusätzlich zur Luftdruckmeßvorrichtung, deren Meßwert auf einer als Zeigerinstrument ausgebildeten Anzeigevorrichtung angezeigt wird, einen Schiebemechanismus aufweist, mit dem die Profiltiefe eines Fahrzeugreifens gemessen werden kann. Dazu wird ein Meßstab aus dem Gehäuse des Reifenluftdruckprüfgeräts geschoben, wobei dessen Eintauchtiefe in das Reifenprofil über eine auf dem Gehäuse neben dem Meßstab aufgedruckte Skala und den Verschiebeweg des Meßstabs ablesbar ist.

### Vorteile der Erfindung

Das erfindungsgemäße Druckprüfgerät mit den kennzeichnenden Merkmalen des Hauptanspruchs hat demgegenüber den Vorteil, daß der Meßwert für den Druck ebenso wie der Meßwert für die Profiltiefe über die Stellung des Zeigers über dem Zifferblatt ablesbar ist. Dadurch vereinfacht sich die Handhabung des Druckprüfgeräts und es verbessert sich die Ablesbarkeit, da die Anzeige über dem Zifferblatt für gewöhnlich deutlicher ablesbar ist, als die zusätzliche Skala neben dem Meßstab. Zudem muß nicht eine zusätzliche, räumlich vom Zifferblatt getrennte Skala am Gehäuse vorgesehen sein, um eine Profiltiefe anzuzeigen. Dadurch verringert sich der Aufwand bei der Herstellung des Gehäuses. Weiterhin muß der Meßmechanismus für die Profiltiefe kein nach außen sichtbares Element aufweisen, mittels dem der Verschiebeweg ablesbar ist. Dadurch verringert sich gleichfalls der Aufwand bei der Herstellung des Gehäuses.

Durch die in den Unteransprüchen aufgeführten Maßnahmen sind vorteilhafte Weiterbildungen und Verbesserungen des im Hauptanspruch angegebenen Druckprüfgeräts möglich.

Die Anordnung der Druckmeßvorrichtung zusammen mit der Anzeigevorrichtung und der Profiltiefenmeßvorrichtung in einem gemeinsamen Gehäuse dient in vorteilhafter Weise dem Schutz der im Gehäuse angeordneten Vorrichtungen vor Beschädigung oder Umwelteinflüssen und gleichzeitig der praktischen Handhabbarkeit, da es sich nur um ein einziges gemeinsames Gehäuse handelt.

Ist die Profiltiefenmeßstange im Gehäuse versenkbar angeordnet, so ist auch diese in vorteilhafter Weise vor Beschädigungen geschützt.

Es ergibt sich der Vorteil, daß bereits eine besonders einfache Mechanik ausreicht, um den Meßwert mittels des Zeigers anzuzeigen, wenn der Zeiger rotatorisch beweglich gelagert ist. Außerdem verringern sich die Außenmaße des Druckprüfgeräts in vorteilhafter Weise, während die Genauigkeit der Anzeige durch die Wahl des Skalierungsfaktors einstellbar ist.

Es stellt einen besonderen Vorteil dar, wenn der Zeiger in der den Meßwert anzeigenden Position verharrt, und erst nach Betätigung eines Rückstellmechanismusses in seine Ruheposition zurückkehrt, da somit auch nach dem Meßvorgang der Profiltiefe ein versehentliches Verändern des Meßwertes nahezu ausgeschlossen ist und so die Ablesegenauigkeit verbessert wird.

Die Arretierung des Zeigers mittels einer Bremsfeder stellt eine den Vorteil der besonderen Kostenersparnis mit sich bringende Realisierungsform einer Anordnung zur Erreichung des Verharrens des Zeigers in der den Meßwert anzeigenden Position dar.

Die Entspannung einer Rückholfeder, welche sich bei der Bewegung des Zeigers aus der Ruheposition selbsttätig spannt, mittels eines Betätigungsmittels bringt den Vorteil mit sich, daß zur Rückbewegung des Zeigers in seine Ruheposition eine beim Meßvorgang selbst auf den Zeiger ausgeübte Kraft gleichzeitig zum Spannen der Rückholfeder ausgenutzt werden kann und somit kein aktives Rückbewegen des Zeigers notwendig ist.

Die Verbindung der Profiltiefenmeßstange mit einem Schubelement, über das ein mit dem Zeiger fest verbundenes Ritzel antreibbar ist, stellt eine besonders aufwandsarme und kostensparende Möglichkeit dar, die Anzeige des Profiltiefenmeßwertes auf den Zeiger zu übertragen. Zudem ist durch konstruktive Dimensionierung des Schubelements auf einfache Weise ein Skalierungsfaktor für die Bewegung des Zeigers einstellbar.

Ebenso bietet die Betätigung des Ritzels über eine vom Druck bewegbare Schubstange den Vorteil einer besonders leicht zu realisierenden, kostensparenden mechanischen Konstruktion.

### Zeichnungen

Ein Ausführungsbeispiel der Erfindung ist in der Zeichnung dargestellt und in der nachfolgenden Beschreibung näher erläutert.

Es zeigen:
Figur 1 eine aufgeschnittene Draufsicht auf ein Druckprüfgerät,
Figur 2 eine teilweise aufgeschnittene Seitenansicht eines Druckprüfgeräts.

### Beschreibung des Ausführungsbeispiels

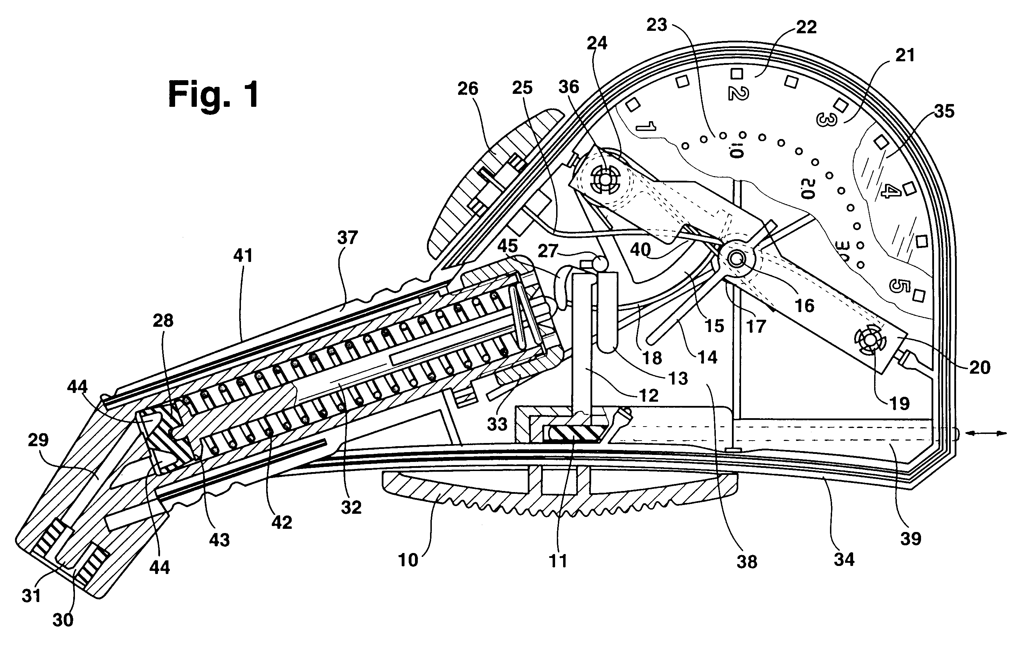

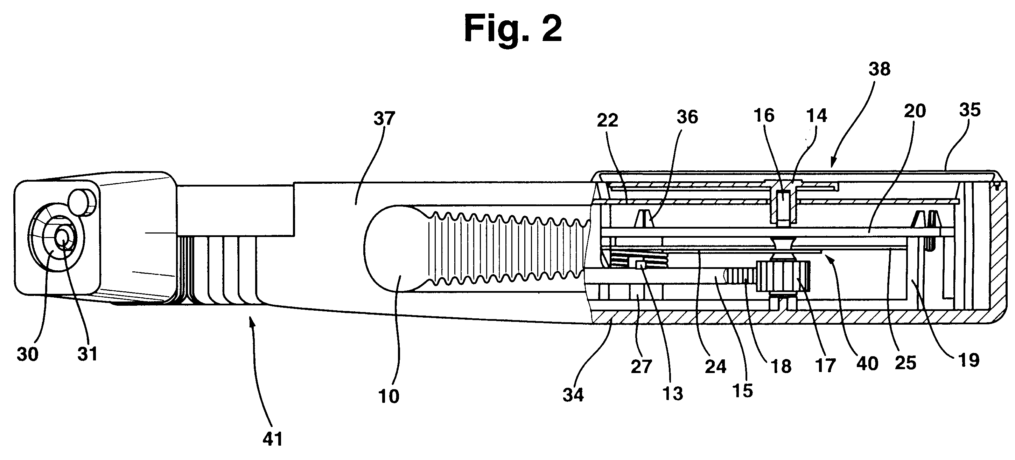

In Figur 1 und Figur 2 ist ein Druckprüfgerät dargestellt, das einen länglichen, hohlen Stutzen 37 aufweist, in dessen Innenraum eine längliche Schubstange 32 angeordnet ist. Die Schubstange 32 ist gleitverschiebbar gelagert und weist an ihrem unteren Ende einen Absatz 43 auf, an dem sich eine Spiralfeder 42 mit ihrem unteren Ende abstützt, welche die Schubstange 32 umschließt und im gestreckten Zustand annähernd so lang ist, wie die Schubstange 32 selbst. Das in der Nähe des oberen Endes der Schubstange 32 befindliche obere Ende der Spiralfeder 42 stützt sich an einer Anschlagkappe 33 ab, welche am Stutzen 37 angebracht ist und eine stirnseitige Begrenzung des Stutzens 37 darstellt. Das mit dem Absatz 43 versehene Ende der Schubstange 32 greift unterhalb des Absatzes 43 in eine Druckkappe 28 ein, die vom Federdruck der Spiralfeder 42 gegen eine stirnseitige Wandung innerhalb des Stutzens 37 gedrückt wird. Die Druckkappe 28 weist an ihrer der Schubstange 32 abgewandten Seite zwei Vertiefungen 44 auf, von denen eine in einen die stirnseitige Wandung durchstoßenden Luftkanal 29 im Stutzen 37 mündet. Am der Druckkappe 28 abgewandten Ende des Luftkanals 29 mündet dieser in eine Einlaßöffnung 30 an einem unteren Ende des Stutzens 37. Konzentrisch zur Einlaßöffnung 30 ist in dieser ein Dorn 31 angeordnet. Der Stutzen 37 mündet mit seinem oberen Ende in ein Gehäuse 34, in dessen Innenraum die Schubstange 32 durch eine Aussparung in der Anschlagkappe 33 hindurch bei Auslenkung aus ihrer Ruhelage entgegen dem Federdruck der Spiralfeder 42 hineingeschoben wird. Dieser Innenraum des Gehäuses 34 ist teilweise zylinderförmig ausgeführt, wobei sich im Zentrum des teilweise zylinderförmigen Gehäuses 34 in etwa koaxial zur Mittelpunktsachse des teilweise zylinderförmigen Gehäuses 34 eine Welle 16 befindet, auf deren oberes Ende ein Zeiger 14 aufgesteckt ist. Die Welle 16 ist direkt unterhalb des Zeigers 14 in einem sich quer durch den Innenraum des Gehäuses 34 erstreckenden Wellenlager 20 gelagert, welches mittels eines ersten Befestigungsstiftes 19 und eines zweiten Befestigungsstiftes 36 am Gehäuse 34 befestigt ist. Das untere Ende der Welle 16 ist gleichfalls im Gehäuse 34 gehaltert. Die beiden Befestigungsstifte 19, 36 verlaufen annähernd parallel zur Welle 16. Auf der Welle 16 ist weiter ein Ritzel 17 angeordnet, mittels dem die Welle 16 drehbar antreibbar ist. Der zweite Befestigungsstift 36 dient zudem als Drehachse für einen schwenkbar am zweiten Befestigungsstift 36 gehalterten Antriebshebel 15, der in etwa in der Form eines Kreissegments gestaltet ist. Auf seiner in etwa kreisförmigen Außenlinie trägt der Antriebshebel 15 eine Zahnleiste 18, welche mit dem Ritzel 17 kämmt. Zudem weist der Antriebshebel 15 eine Antriebsfläche 45 auf, gegen die das in das Gehäuse 34 ragende obere Ende der Schubstange 32 drückbar ist. Auf der der Schubstange 32 zugewandten Seite ist im in etwa zylinderförmigen Innenraum des Gehäuses 34 ein annähernd parallel zur Welle 16 verlaufender Anschlagstift 27 vorgesehen, gegen den der Antriebshebel 15 mittels einer spiralförmigen Rückholfeder 24 gedrückt wird. Die Rückholfeder 24 ist dabei um den zweiten Befestigungsstift 36 herum angeordnet und ist an je einem Ende tangential zum Kreisumfang der Rückholfeder 24 verlängert, wobei die beiden verlängerten Enden beispielsweise einen Winkel zwischen 5 und 45 Grad einschließen. Die Rückholfeder 24 ist mit ihrem einen Ende am Antriebshebel 15 befestigt. Das andere Ende der Rückholfeder 24 drückt aufgrund der Spreizkraft der Rückholfeder 24 gegen die Welle 16, ebenso wie die Spreizkraft den Antriebshebel 15 gegen den Anschlagstift 27 drückt. Weiterhin ist an der Außenseite des Gehäuses 34 ein Betätigungsmittel 26 in Form einer Taste angeordnet, in dem ein Ende einer gebogenen Bremsfeder 25 gehaltert ist, die durch eine Aussparung in der Gehäusewand hindurch in den Innenraum des Gehäuses 34 geführt ist. Die Bremsfeder 25 ist in etwa S-förmig gebogen und mit ihrem weiteren Ende am ersten Befestigungsstift 19 befestigt. Die Bremsfeder 25 liegt dabei unter Spannung an der Welle 16 so an, daß ein Verbiegen der Bremsfeder 25 mittels Betätigung des Betätigungsmittels 26 ein Abheben der Bremsfeder 25 von der Welle 16 bewirkt. Der Antriebshebel 15 weist außerdem nahe des Anschlagstiftes 27 eine Nase 13 auf, welche auf der dem Stutzen 37 zugewandten Seite von einem Schubelement 12 berührt wird. Das Schubelement 12 ist kraftschlüssig mit einer außerhalb des Gehäuses 34 angeordneten, die Wandung des Gehäuses 34 teilweise durchdringenden Schiebetaste 10 verbunden. Die Schiebetaste 10 ist in etwa parallel zur Gehäusewandung verschiebbar, wobei das Schubelement 12 mitbewegt wird. Zusätzlich ist im innerhalb des Gehäuses 34 liegenden Teil der Schiebetaste 10 eine Profiltiefenmeßstange 11 gehaltert, die sich in etwa parallel zum Verschiebeweg der Schiebetaste 10 durch eine Auslaßöffnung im Gehäuse 34 hindurch aus dem Gehäuse 34 hinaus bewegen läßt. Weiter ist unmittelbar unterhalb des Zeigers 14 in etwa senkrecht zur Welle 16 ein den Innenraum des Gehäuses 34 zum Zeiger 14 hin abdeckendes Zifferblatt 22 angeordnet, welches eine äußere, erste Anzeigeskala 21 und eine innere, zweite Anzeigeskala 23 aufweist. Das Gehäuse 34 ist oberhalb des Zifferblatts 22 mit einer transparenten Deckscheibe 35 verschlossen. Der Zeiger 14 bildet zusammen mit den Anzeigeskalen 21, 23 auf dem Zifferblatt 22 eine Anzeigevorrichtung 38. Die Schiebetaste 10 bildet zusammen mit der Profiltiefenmeßstange 11, dem Schubelement 12 und der Nase 13 eine Profiltiefenmeßvorrichtung 39. Eine Druckmeßvorrichtung 41 umfaßt die Einlaßöffnung 30, den Luftkanal 29, die Druckkappe 28, die Schubstange 32, die Spiralfeder 42, die Antriebsfläche 45 und die Anschlagkappe 33. Die Rückholfeder 24 bildet zusammen mit der Bremsfeder 25 und dem Betätigungsmittel 26 einen Rückholmechanismus 40.

Das Druckprüfgerät wird mit der am Kopfende des Stutzens 37 befindlichen Einlaßöffnung 30 auf ein Ventil eines Fahrzeugreifens aufgesetzt, wobei der Dorn 31 das Ventil öffnet. Der im Reifen vorherrschende Luftdruck breitet sich sodann in den Luftkanal 29 und von dort in die Vertiefungen 44 in der Druckkappe 28 aus. Durch den erhöhten Luftdruck verschiebt sich die Schubstange 32 entgegen der Federkraft der Spiralfeder 42 so, daß ihr oberes Ende, welches auf der Antriebsfläche 45 aufliegt, eine Schwenkbewegung des Antriebshebels 15 um den zweiten Befestigungsstift 36 bewirkt. Durch die Schwenkbewegung des Antriebshebels 15 wird das Ritzel 17 und somit auch der Zeiger 14 in seiner Winkelstellung verdreht. Somit ist der Verdrehwinkel des Zeigers 14 ein Maß für den im Fahrzeugreifen vorherrschenden Luftdruck. Die Winkelstellung des Zeigers 14 ist mittels der ersten Anzeigeskala 21 auf dem Zifferblatt 22 ablesbar. Wird das Druckprüfgerät wieder vom Fahrzeugreifen entfernt, so läßt der Luftdruck im Luftkanal 29 nach und die Schubstange 32 wird von der Federkraft der Spiralfeder 42 wieder in ihre Ruhelage zurückbewegt. Durch den Federdruck der Bremsfeder 25 auf die Welle 16 wird die Welle 16 in ihrer den Meßwert anzeigenden Position festgehalten. Der Druck der Bremsfeder 25 auf die Welle 16 ist dabei größer als die Rückstellkraft der Rückholfeder 24. Wird das Betätigungsmittel 26 durch Drücken betätigt, d.h. um ein Stück in das Gehäuse 34 hineingeschoben, so verbiegt sich die Bremsfeder 25 so, daß sie nicht mehr an der Welle 16 anliegt. Daraufhin wird der Antriebshebel 15 durch die Rückstellkraft der Rückholfeder 24 wieder zurück gegen den Anschlagstift 27 in seine Ruhelage bewegt. Gleichzeitig wird der Zeiger 14 über die Verkopplung des Ritzels 17 mit dem Antriebshebel 15 über die Zahnleiste 18 in eine dem Nullpunkt entsprechende Ruhelage zurückbewegt. Somit ist es einem Benutzer des Druckprüfgeräts möglich, einen Reifendruck zu messen, das Druckprüfgerät vom Reifen anschließend zu entfernen und den Meßwert abzulesen und erst nach dem Ablesen ein Löschen des angezeigten Meßwerts durch Betätigen des Betätigungsmittels 26 zu bewirken. Zur Messung der Profiltiefe eines Fahrzeugreifens wird das Druckprüfgerät mit der vor der Profiltiefenmeßstange 11 liegenden Auslaßöffung im Gehäuse 34 an den Fahrzeugreifen angesetzt und die Profiltiefenmeßstange 11 mittels der Schiebetaste 10 aus dem Gehäuse 34 so weit herausgeschoben, bis die Profiltiefenmeßstange 11 am Grund des Reifenprofils angestoßen ist. Durch das Verschieben der Profiltiefenmeßstange 11 wird gleichzeitig über das Schubelement 12 und die Nase 13 der Antriebshebel 15 bewegt, wodurch ebenfalls wiederum der Zeiger 14 aus seiner Ruhelage in eine den Meßwert der Profiltiefe anzeigenden Lage verdreht wird. Zum Ablesen des Profiltiefenwertes dient in diesem Falle die zweite Anzeigeskala 23 auf dem Zifferblatt 22. Auch hier ist es vorgesehen, daß nach dem Messen der Profiltiefe die Profiltiefenmeßstange 11 wieder in das Gehäuse 34 zurückgezogen wird, indem die Schiebetaste 10 in entsprechender Richtung betätigt wird, wobei, ebenso wie bei der Messung des Drucks, der Zeiger 14 in der den Meßwert anzeigenden Position verharrt. Auch hier ist es wiederum vorgesehen, daß nach dem Ablesen des Meßwerts für die Profiltiefe der Zeiger 14 durch Betätigung des Betätigungsmittels 26 in seine Ruhelage zurückbewegt wird. Alternativ zum beschriebenen Ausführungsbeispiel ist es ebenso vorgesehen, einen translatorisch bewegten Zeiger 14 mit einer entsprechenden Mechanik auszurüsten, damit sowohl die Profiltiefe als auch der gemessene Druck über die Bewegung des Zeigers 14 angezeigt werden können. Anstelle der beschriebenen Federn 42, 25, 24 können ebensogut andere, in ihrer Wirkung äquivalente Bauteile vorgesehen sein. Um die Anzeigegenauigkeit zu erhöhen ist es weiter vorgesehen, ein oder mehrere Getriebe anzuordnen, was eine Spreizung der Skalierung einer oder beider Skalen 21, 23 erlaubt. Der Skalierungsfaktor ist außerdem durch Variation der Lage der einzelnen die Zeigerbewegung bewirkenden mechanischen Elemente variierbar. Insbesondere ist auch eine für Druck und Profiltiefe gemeinsam verwendbare Anzeigeskala 21 einsetzbar.

## Patentansprüche

1. Druckprüfgerät mit einer Druckmeßvorrichtung (41) zur Messung eines Drucks, insbesondere des Luftdrucks von Kraftfahrzeugreifen, mit einer Anzeigevorrichtung (38) mit einem beweglich über einem Zifferblatt (22) mit einer Anzeigeskala (21) gelagerten Zeiger (14) zur Anzeige des gemessenen Drucks und mit einer Profiltiefenmeßvorrichtung (39) die eine verschiebbar gelagerte Profiltiefenmeßstange (11) aufweist, dadurch gekennzeichnet, daß der Verschiebeweg der Profiltiefenmeßstange (11) mittels des Zeigers (14) auf der Anzeigeskala (21) oder einer auf dem Zifferblatt (22) angeordneten weiteren Anzeigeskala (23) anzeigbar ist.

2. Druckprüfgerät nach Anspruch 1, dadurch gekennzeichnet, daß die Druckmeßvorrichtung (41) zusammen mit der Anzeigevorrichtung (38) und der Profiltiefenmeßvorrichtung (39) in einem gemeinsamen Gehäuse (34) angeordnet ist.

3. Druckprüfgerät nach Anspruch 2, dadurch gekennzeichnet, daß die Profiltiefenmeßstange (11) im Gehäuse (34) versenkbar ist.

4. Druckprüfgerät nach einem der Ansprüche 1 bis 3, dadurch gekennzeichnet, daß der Zeiger (14) rotatorisch beweglich gelagert ist.

5. Druckprüfgerät nach einem der Ansprüche 1 bis 4, dadurch gekennzeichnet, daß der Zeiger (14) so gelagert ist, daß er nach einer Auslenkung aus einer Ruheposition zur Anzeige eines Meßwertes des Drucks oder der Profiltiefe in der den Meßwert anzeigenden Position verharrt und erst nach Betätigung eines Rückstellmechanismus (40) in seine Ruheposition zurückkehrt.

6. Druckprüfgerät nach Anspruch 5, dadurch gekennzeichnet, daß der Zeiger (14) mittels einer Bremsfeder (25) in der den Meßwert anzeigenden Position arretierbar ist.

7. Druckprüfgerät nach Anspruch 5 oder 6, dadurch gekennzeichnet, daß der Rückstellmechanismus (40) ein Betätigungsmittel (26) aufweist, mittels dem eine Rückholfeder (24) entspannbar ist, die sich bei der Bewegung des Zeigers (14) aus der Ruheposition selbsttätig spannt.

8. Druckprüfgerät nach einem der Ansprüche 1 bis 7, dadurch gekennzeichnet, daß die Profiltiefenmeßstange (11) mit einem Schubelement (12) verbunden ist, über das ein mit dem Zeiger (14) fest verbundenes Ritzel (17) antreibbar ist.

9. Druckprüfgerät nach Anspruch 8, dadurch gekennzeichnet, daß das Ritzel (17) über eine vom Druck bewegbare Schubstange (32) antreibbar ist.
